# EUROPEAN PATENT SPECIFICATION

(11) **EP 4 250 389 B1**
(45) Date of publication and mention of the grant of the patent: **07.10.2026**
(21) Application number: 22883844.7
(22) Date of filing: 11.10.2022
(51) Int. Cl.: H01M 4/13, H01M 4/62, H01M 4/38, H01M 4/36, H01M 10/052, H01M 4/02, H01M 4/04, H01M 4/58, H01M 4/583

(54) **CATHODE FOR LITHIUM SECONDARY BATTERY, AND LITHIUM SECONDARY BATTERY COMPRISING SAME**
KATHODE FÜR LITHIUMSEKUNDÄRBATTERIE UND LITHIUMSEKUNDÄRBATTERIE DAMIT
CATHODE POUR BATTERIE RECHARGEABLE AU LITHIUM ET BATTERIE RECHARGEABLE AU LITHIUM LA COMPRENANT

(30) Priority: 20.10.2021 KR 20210140210
(43) Date of publication of application: 27.09.2023
(73) Proprietor: LG Energy Solution, Ltd., Seoul 07335 (KR)
(72) Inventor: CHOI, Ran, Daejeon 34122 (KR); SOHN, Kwonnam, Daejeon 34122 (KR)
(74) Representative: Goddar, Heinz J.
(86) International application number: PCT/KR2022/015251
(87) International publication number: WO 2023/068621

(56) References cited:
- CN-A- 102 117 909
- JP-A- 2014 082 030
- JP-A- 2021 082 537
- KR-A- 20120 014 542
- KR-A- 20140 135 741
- KR-A- 20200 113 122
- US-A1- 2013 115 521

## Description

### [Technical Field]

The present application claims the benefit of priority based on Korean Patent Application No. 10-2021-0140210 filed on October 20, 2021.

The present invention relates to a positive electrode for a lithium secondary battery and a lithium secondary battery comprising the same.

### [Background Art]

As the utilization range of lithium secondary batteries is expanded not only to portable electronic devices and communication devices, but also to electric vehicles (EV) and electric storage systems (ESS), the demand for high capacity of lithium secondary batteries used as their power sources is increasing.

The lithium-sulfur battery among various lithium secondary batteries is a battery system using a sulfur-based material having a sulfur-sulfur bond as a positive electrode active material and using lithium metal, a carbon-based material in which intercalation/deintercalation of lithium ions occurs, or silicon or tin that forms an alloy with lithium as a negative electrode active material.

There is an advantage that sulfur, which is the main material of the positive electrode active material in the lithium-sulfur battery, has a low atomic weight, is very rich in resources and thus easy to supply and receive, and is cheap, non-toxic and environmentally friendly.

In addition, the lithium-sulfur battery has a theoretical discharging capacity of 1,675 mAh/g derived from a conversion reaction of lithium ion and sulfur (S₈+16Li⁺+16e⁻ → 8Li₂S) in the positive electrode, and if lithium metal (theoretical capacity: 3,860 mAh/g) is used as the negative electrode, the theoretical energy density is 2,600 Wh/kg. Since the energy density of the lithium-sulfur battery is much higher than the theoretical energy density of other battery systems currently under study (Ni-MH battery: 450Wh/kg, Li-FeS battery: 480 Wh/kg, Li-MnO₂ battery: 1,000Wh/kg, Na-S battery: 800 Wh/kg) and lithium-ion battery (250 Wh/kg), the lithium-sulfur battery is attracting attention as a high-capacity, eco-friendly and low-cost lithium secondary battery among secondary batteries that have been developed to date, and is a next-generation battery system to which several studies are being conducted.

During the discharging of the lithium-sulfur battery, a reduction reaction in which sulfur accepts electrons occurs at the positive electrode and an oxidation reaction in which lithium is ionized occurs at the negative electrode. The lithium-sulfur battery generates lithium polysulfide (Li₂Sₓ, x = 2 to 8) in the positive electrode during the discharging, and the lithium polysulfide is easily dissolved in the electrolyte and leached from the positive electrode, and thus the reversible capacity of the positive electrode is greatly reduced, and also the dissolved lithium polysulfide is diffused to the negative electrode, thereby causing various side reactions. Also, during the charging process, the lithium polysulfide causes a shuttle reaction, thereby significantly reducing the charging/discharging efficiency.

Since such leaching of lithium polysulfide adversely affects the capacity and lifetime characteristics of a battery, various techniques have been proposed to solve the problem of lithium polysulfide.

For example, Korean Laid-open Patent Publication No. 2017-0139761 discloses that the capacity and lifetime of the battery can be improved by providing a positive electrode active material layer and a protective layer comprising a carbon material doped with nitrogen and incorporating chitosan as a binder into the positive electrode active material layer, thereby delaying the leaching of lithium polysulfide.

In addition, Korean Laid-open Patent Publication No. 2016-0046775 discloses that it is possible to improve the cycle characteristics of a battery by providing a positive electrode coating layer made of an amphiphilic polymer on a partial surface of the active part of the positive electrode containing a sulfur-carbon composite, thereby inhibiting the leaching of lithium polysulfide and facilitating the movement of lithium ions.

In addition, Korean Laid-open Patent Publication No. 2016-0037084 discloses that by coating graphene on the carbon nanotube aggregate containing sulfur, the lithium polysulfide is prevented from being dissolved, and the electrical conductivity of the sulfur-carbon nanotube composite and the loading amount of sulfur can be increased.

These patents improve the problem of performance or lifetime degradation of the lithium-sulfur battery to some extent, by introducing a substance capable of adsorbing the lithium polysulfide in the form of an additive or coating layer into the positive electrode or by changing the material or structure of the positive electrode to prevent the leaching of lithium polysulfide, but the effect is insufficient. In addition, a deterioration problem may occur due to the newly introduced material, and the method presented in these patent publications is not only somewhat complicated, but also has a problem that the amount (i.e., the loading amount) that can be put into the positive electrode active material is limited. Therefore, it is necessary to develop a lithium-sulfur battery having excellent performance by solving the leaching problem of lithium polysulfide.

### [Prior Art Documents]

### [Patent Documents]

(Patent Document 1) Korean Laid-open Patent Publication No. 2017-0139761
(Patent Document 2) Korean Laid-open Patent Publication No. 2016-0046775
(Patent Document 3) Koᵣₑan Laid-open Patent Publication No. 2016-0037084

CN 102117909 A discloses a preparation method of an anode material. The method comprises the following steps: ball milling nickel-based **materials, Mo6S8** and a lithium source and then sintering under protective gas at the temperature of 830-870 °C for 10-16h.

KR 10-2020-0113122 discloses a method including a step of mixing and heat-treating the dried particles of the positive electrode active material and boric acid in a dry state.

### [Disclosure]

### [Technical Problem]

Accordingly, the inventors of the present invention have conducted research from various angles to solve the above problems, and as a result, have completed the present invention by confirming that if Mo₆S₈ treated with a base, as an additive, is incorporated into the positive electrode active material layer of the positive electrode for the lithium secondary battery, the problem of the leaching of lithium polysulfide occurring in a lithium secondary battery comprising the positive electrode, particularly, a lithium-sulfur battery, can be solved, and the stability of the positive electrode active material layer is improved to reduce the overvoltage of the lithium-sulfur battery, and to improve the discharging capacity and output characteristics.

Therefore, it is an object of the present invention to provide a positive electrode for a lithium secondary battery capable of suppressing the leaching of lithium polysulfide and improving characteristics of a lithium-sulfur battery.

In addition, it is another object of the present invention to provide a lithium secondary battery comprising the positive electrode.

### [Technical Solution]

The above problems are solved in accordance with the subject-matter of the independent claims. Further embodiments result from the sub-claims and the following description.

In order to achieve the above objects,
the present invention provides a positive electrode for a lithium secondary battery, comprising:
a current collector; and a positive electrode active material layer disposed on at least one surface of the current collector,
wherein the positive electrode active material layer comprises a positive electrode active material and an additive, wherein the positive electrode active material comprises at least one selected from the group consisting of elemental sulfur (S₈), Li₂Sₙ (n≥1, n is an integer), organic sulfur compound and carbon-sulfur polymer [(C₂Sₓ)ₙ, 2.5 ≤ x ≤ 50, n ≥ 2, x and n are integers]; characterized in that the additive comprises a base-treated Mo₆S₈.

In addition, the present invention provides a lithium secondary battery comprising the positive electrode of the present invention; a negative electrode; a separator interposed between the positive electrode and the negative electrode; and an electrolyte.

### [Advantageous Effects]

The positive electrode for the lithium secondary battery according to the present invention has an excellent effect of inhibiting the leaching of lithium polysulfide, and can improve the stability of the positive electrode active material layer, by incorporating Mo₆S₈ treated with a base, as an additive, into the positive electrode active material layer.

Accordingly, the lithium secondary battery comprising the positive electrode for the lithium secondary battery according to the present invention may exhibit the effect of reducing overvoltage and improving discharge capacity and output characteristics.

### [Description of Drawings]

FIG. 1 is a graph of the initial discharging capacity of the lithium-sulfur battery evaluated in Experimental Example 1.
FIG. 2 is a graph of the lifetime characteristics of the lithium-sulfur battery measured in Experimental Example 1.
FIG. 3 is a graph of the output characteristics of the lithium-sulfur battery measured in Experimental Example 1.

### [Best Mode]

Hereinafter, the present invention will be described in more detail.

The terms and words used in the present specification and claims should not be construed as limited to ordinary or dictionary terms, and should be construed in a sense and concept consistent with the technical idea of the present invention, based on the principle that the inventor can properly define the concept of a term to describe his invention in the best way possible.

The terminology used herein is for the purpose of describing a particular embodiment only and is not intended to be limiting of the present invention. The singular forms "a," "an," and "the" include plural referents unless the context clearly dictates otherwise. It is to be understood that the terms "comprise", or "have", etc., as used in the present specification, are intended to designate the presence of implemented features, numbers, steps, operations, components, parts or combinations thereof, but not to preclude the possibility of the presence or addition of one or more other features, numbers, steps, operations, components, parts or combinations thereof.

The term "polysulfide" as used herein is a concept comprising both "polysulfide ions (Sₓ²⁻, x = 8, 6, 4, 2)) "and "lithium polysulfides (Li₂Sₓ or LiSₓ⁻, x = 8, 6, 4, 2)."

### Positive electrode for lithium secondary battery

The present invention relates to a positive electrode for a lithium secondary battery comprising a current collector; and a positive electrode active material layer disposed on at least one surface of the current collector,
wherein the positive electrode active material layer comprises a positive electrode active material and an additive,
wherein the additive comprises a base-treated Mo₆S₈.

The Mo₆S₈ is a compound that inhibits the leaching of lithium polysulfide, which is generally prepared using copper sulfide (CuS), molybdenum (Mo) and molybdenum disulfide (MoS₂).

Specifically, copper sulfide (CuS), molybdenum (Mo) and molybdenum disulfide (MoS₂) are ball-milled and then heated to a temperature of 800 to 1200°C under hydrogen (H₂) and an inert atmosphere to prepare Cu₂Mo₆S₈. In order to remove copper from the compound of Cu₂Mo₆S₈, the compound of Cu₂Mo₆S₈ is added to an acidic solution and stirred to finally obtain Mo₆S₈.

Since an acidic solution is used to remove copper in the preparation process, Mo₆S₈ may exhibit acidity. If Mo₆S₈ representing the acidity is used as an additive for the positive electrode active material layer, there is a problem that the positive electrode active material layer also exhibits acidity, and accordingly, the positive electrode becomes unstable and the reactivity is decreased.

Therefore, the present invention is to neutralize the acidic atmosphere by treating the Mo₆S₈ with a base, improve the stability of the positive electrode active material layer, and suppress the leaching of lithium polysulfide.

The base treatment may be performed by adding Mo₆S₈ to an aqueous base solution and stirring it. In this case, the base may be lithium hydroxide (LiOH) or potassium hydroxide (KOH), preferably lithium hydroxide. Since the base treatment of Mo₆S₈ does not depend on the concentration of the aqueous base solution, the concentration of the aqueous base solution is not particularly limited, but an excess concentration may be preferably used. Also, the stirring time is not particularly limited, and the stirring may be performed at a time generally used in the art.

If, without base treatment, Mo₆S₈ is used as an additive, the pH of the positive electrode active material layer comprising it may be 1 to 4.

Accordingly, the positive electrode active material layer containing the base-treated Mo₆S₈ may have a pH of 7 to 9 as it neutralizes the acidic atmosphere of Mo₆S₈ due to the base treatment. Thus, since the stability of the positive electrode is improved, the discharging capacity and lifetime characteristics of a lithium secondary battery comprising the same, preferably a lithium-sulfur battery, can be improved, and an overvoltage can be improved.

The additive may be contained in an amount of 1 to 10% by weight, preferably 3 to 7% by weight, based on the total weight of 100% by weight of the base solids comprised in the positive electrode active material layer. If the additive is contained in an amount of less than 1% by weight, the inhibitory effect of the leaching of lithium polysulfide is insignificant, and the above-described effect cannot be expressed. In addition, if the additive is contained in an amount exceeding 10% by weight, the proportion of the positive electrode active material is relatively decreased, so that the capacity of the battery may be reduced. Therefore, it is preferable that the appropriate amount of the additive is determined within the above-mentioned range.

The positive electrode active material comprises at least one selected from the group consisting of elemental sulfur (S₈), Li₂Sₙ (n≥1, n is an integer), organic sulfur compound and carbon-sulfur polymer [(C₂Sₓ)ₙ, 2.5 ≤ x ≤ 50, n ≥ 2, x and n are integers], and the sulfur may be an inorganic sulfur.

In addition, the positive electrode active material may be preferably a sulfur-carbon composite.

The sulfur-carbon composite may comprise a porous carbon material and sulfur contained in at least a portion of inner and outer surfaces of the porous carbon material.

The sulfur-carbon composite comprises a porous carbon material which not only provides a framework capable of uniformly and stably immobilizing sulfur described above but also compensates for the low electrical conductivity of sulfur so that the electrochemical reaction can proceed smoothly.

The porous carbon material can be generally produced by carbonizing precursors of various carbon materials. The porous carbon material may comprise uneven pores therein, the average diameter of the pores is in the range of 1 to 200 nm, and the porosity may be in the range of 10 to 90% of the total volume of the porous carbon material. If the average diameter of the pores is less than the above range, the pore size is only at the molecular level and impregnation with sulfur is impossible. On the contrary, if the average diameter of the pores exceeds the above range, the mechanical strength of the porous carbon material is weakened, which is not preferable for application to the manufacturing process of the electrode.

The shape of the porous carbon material is in the form of sphere, rod, needle, plate, tube, or bulk, and can be used without limitation as long as it is commonly used in a lithium secondary battery.

The porous carbon material may have a porous structure or a high specific surface area, and may be any of those conventionally used in the art. For example, the porous carbon material may be, but is not limited to, at least one selected from the group consisting of graphite; graphene; carbon blacks such as Denka black, acetylene black, Ketjen black, channel black, furnace black, lamp black, and thermal black; carbon nanotubes (CNTs) such as single wall carbon nanotube (SWCNT) and multiwall carbon nanotubes (MWCNT); carbon fibers such as graphite nanofiber (GNF), carbon nanofiber (CNF), and activated carbon fiber (ACF); mesoporous carbon; graphite such as natural graphite, artificial graphite, and expanded graphite, and activated carbon. Preferably, the porous carbon material may be carbon nanotubes.

The sulfur in the sulfur-carbon composite according to the present invention is located on at least one of the inner and outer surfaces of the afore-mentioned porous carbon material, and for example, may be present in an area of less than 100%, preferably 1 to 95%, and more preferably 40 to 96% of the entire inner and outer surfaces of the porous carbon material. When sulfur is present on the inner and outer surfaces of the porous carbon material within the above range, it can show the greatest effect in terms of the electron transfer area and the wettability with the electrolyte. Specifically, since sulfur is thinly and evenly impregnated on the inner and outer surfaces of the porous carbon material in the above range, the electron transfer contact area may be increased during the charging/discharging process. If sulfur is located at the area of 100% of the entire inner and outer surface of the porous carbon material, since the porous carbon material is completely covered with sulfur, the wettability to the electrolyte is deteriorated and the contact property is deteriorated, and thus the porous carbon material cannot receive electrons and cannot participate in the electrochemical reaction.

The sulfur-carbon composite may contain 65 to 90 parts by weight, preferably 70 to 85 parts by weight, and more preferably 72 to 80 parts by weight of sulfur, based on 100 parts by weight of the sulfur-carbon composite. If the content of sulfur is less than the above-described range, as the content of the porous carbon material in the sulfur-carbon composite is relatively increased, the specific surface area is increased, so that the content of the binder is increased during the manufacture of the positive electrode. The increase in the amount of the binder used may eventually increase the sheet resistance of the positive electrode and act as an insulator to prevent electron pass, thereby deteriorating the performance of the battery. On the contrary, if the content of sulfur exceeds the above range, sulfur that cannot be combined with the porous carbon material agglomerates between them or re-leaches to the surface of the porous carbon material, and thus becomes difficult to receive electrons and cannot participate in electrochemical reactions, resulting in loss of the capacity of the battery.

The method for preparing the sulfur-carbon composite is not particularly limited in the present invention, and a method commonly used in the art may be used. For example, a method of simply mixing sulfur and the porous carbon material and then heat-treating them to form a composite may be used.

The positive electrode active material may further comprise at least one additive selected from a transition metal element, a group IIIA element, a group IVA element, a sulfur compound of these elements, and an alloy of these elements and sulfur, in addition to the above-described components.

The transition metal element may comprise Sc, Ti, V, Cr, Mn, Fe, Co, Ni, Cu, Zn, Y, Zr, Nb, Mo, Tc, Ru, Rh, Pd, Os, Ir, Pt, Au, Hg or the like, and the group IIIA element may comprise Al, Ga, In, Tl and the like, and the group IVA element may comprise Ge, Sn, Pb, and the like.

In the positive electrode for the lithium secondary battery of the present invention, the positive electrode active material may be contained in an amount of 50 to 95% by weight, preferably 70 to 95% by weight, and more preferably 85 to 95% by weight based on a total weight of 100 % by weight of base solids contained in the positive electrode active material layer. If the content of the positive electrode active material is less than the above range, it is difficult for the positive electrode to sufficiently exert an electrochemical reaction. On the contrary, if the content exceeds the above range, there is a problem that the physical properties of the positive electrode to be described later are lowered.

The positive electrode active material layer of the positive electrode for the lithium secondary battery of the present invention may further include a conductive material for allowing electrons to smoothly move within the positive electrode and a binder for well adhering the positive electrode active material to the current collector.

The conductive material is a material that acts as a path, through which electrons are transferred from the current collector to the positive electrode active material, by electrically connecting the electrolyte and the positive electrode active material. The conductive material can be used without limitation as long as it has electrical conductivity.

For example, as the conductive material, carbon black, such as Super-P, Denka black, acetylene black, Ketjen black, channel black, furnace black, lamp black, thermal black and carbon black; carbon derivatives such as carbon nanotubes and fullerenes; electrically conductive fibers such as carbon fibers and metal fibers; carbon fluoride; metal powders such as aluminum and nickel powder; or electrically conductive polymers such as polyaniline, polythiophene, polyacetylene, and polypyrrole may be used alone or in combination.

The content of the conductive material may be 1 to 10% by weight, based on 100% by weight of the total weight of the base solids contained in the positive electrode active material layer. If the content of the conductive material is less than the above range, it is difficult to transfer electrons between the positive electrode active material and the current collector, thereby reducing voltage and capacity. On the contrary, if the content of the conductive material exceeds the above range, the proportion of the positive electrode active material may be reduced, so that the total energy (charge amount) of the battery may be reduced. Therefore, it is preferable that the content of the conductive material is determined to be an appropriate content within the above-described range.

The binder maintains the positive electrode active material in the positive electrode current collector, and organically connects between the positive electrode active materials to further increase the bonding force between them, and any binder known in the art can be used as the binder.

For example, the binder may be fluororesin-based binders comprising polyvinylidene fluoride (PVdF) or polytetrafluoroethylene (PTFE); rubber-based binders comprising styrene butadiene rubber (SBR), acrylonitrile-butadiene rubber, and styrene-isoprene rubber; cellulose-based binders comprising carboxymethylcellulose (CMC), starch, hydroxy propyl cellulose, and regenerated cellulose; polyalcohol-based binders; polyolefin-based binders comprising polyethylene and polypropylene; polyimide-based binders; polyester-based binders; and silane-based binders, or mixtures or copolymers of two or more thereof.

The content of the binder may be 1 to 10 % by weight based on 100 % by weight of the total weight of the base solids of the positive electrode active material layer. If the content of the binder is less than the above range, the physical properties of the positive electrode may be deteriorated, and thus the positive electrode active material and the conductive material in the positive electrode may be detached. If the content exceeds the above range, since the ratio of positive electrode active material and conductive material in the positive electrode is relatively reduced, the capacity of the battery may be reduced. Therefore, it is preferable that the content is appropriately determined within the above-described range.

The positive electrode current collector supports the positive electrode active material and is not particularly limited as long as it has high conductivity without causing chemical changes in the relevant battery. For example, copper, stainless steel, aluminum, nickel, titanium, palladium, sintered carbon; copper or stainless-steel surface-treated with carbon, nickel, silver or the like; aluminum-cadmium alloy or the like may be used as the positive electrode current collector.

The positive electrode current collector can enhance the bonding strength with the positive electrode active material by having fine irregularities on its surface, and may be formed in various forms such as film, sheet, foil, mesh, net, porous body, foam, or nonwoven fabric.

In the present invention, the method of manufacturing the positive electrode for the lithium secondary battery is not particularly limited, and a method known to a person skilled in the art or various methods modified therefrom may be used.

As an example, the positive electrode for the lithium-sulfur battery may be prepared by preparing a slurry composition for a positive electrode comprising the above-described components, and then applying it to at least one surface of the positive electrode current collector to form a positive electrode active material layer.

The slurry composition for the positive electrode comprises the positive electrode active material and the additive as described above, and may further comprise a conductive material and a solvent in addition to a binder.

As the solvent, one capable of uniformly dispersing a positive electrode active material, and an additive is used. Such a solvent is an aqueous solvent, and water is most preferred, and in this case, water may be distilled water or de-ionized water. However, it is not necessarily limited thereto, and if necessary, a lower alcohol that can be easily mixed with water may be used. Examples of the lower alcohol comprise methanol, ethanol, propanol, isopropanol, and butanol, and preferably, they may be used in combination with water.

The content of the solvent may be contained at a level having a concentration that allows easy coating, and the specific content varies depending on the application method and apparatus.

The slurry composition for a positive electrode may additionally contain, if necessary, materials commonly used for the purpose of improving its function in the relevant technical field as necessary. For example, a viscosity modifier, a fluidizing agent, a filler, etc. are mentioned.

The method of applying the slurry composition for a positive electrode is not particularly limited in the present invention, and for example, methods such as a doctor blade method, a die casting method, a comma coating method, and a screenprinting method can be used. In addition, after being molded on a separate substrate, the slurry for the positive electrode may be applied on the positive electrode current collector by a pressing or lamination method.

After the application, a drying process for removing the solvent may be performed. The drying process is performed at a temperature and time at a level capable of sufficiently removing the solvent, and the conditions may vary depending on the type of the solvent, and thus are not particularly limited in the present invention. Examples of the drying method may comprise a drying method by warm air, hot air, or low-humidity air, a vacuum drying method, and a drying method by irradiation with (far)-infrared radiation or electron beam. The drying rate is usually adjusted so that the solvent can be removed as quickly as possible within a speed range that does not cause cracks in the positive electrode active material layer due to the concentration of stress and does not delaminate the positive electrode active material layer from the positive electrode current collector.

Additionally, the density of the positive electrode active material in the positive electrode may be increased by pressing the current collector after drying. In this case, methods, such as a mold press and a roll press, are mentioned as a press method.

The porosity of the positive electrode, specifically, the positive electrode active material layer prepared by the above-described composition and manufacturing method may be 50 to 80%, and preferably 60 to 75%. If the porosity of the positive electrode is less than 50%, since the degree of filling of the slurry composition for the positive electrode comprising a positive electrode active material, an additive, a conductive material, and a binder becomes too high, there are problems that sufficient electrolyte to exhibit ion conduction and/or electrical conduction between positive electrode active materials cannot be maintained, and thus output characteristics or cycle characteristics of the battery may be deteriorated, the overvoltage and the reduction in discharging capacity become serious. On the contrary, if the porosity of the positive electrode exceeds 80% and has an excessively high porosity, there is a problem that the physical and electrical connection with the current collector is lowered and thus adhesion is lowered and the reaction becomes difficult, and there is a problem that the increased pores are filled by the electrolyte and thus the energy density of the battery is lowered. Therefore, the porosity of the positive electrode is appropriately adjusted within the above range.

### Lithium secondary battery

In addition, the present invention relates to a lithium secondary battery comprising the positive electrode as described above; a negative electrode; a separator interposed between the positive electrode and the negative electrode; and an electrolyte.

The lithium secondary battery of the present invention may preferably be a lithium-sulfur battery.

The negative electrode may comprise a negative electrode current collector and a negative electrode active material layer applied to one or both surfaces of the negative electrode current collector. Alternatively, the negative electrode may be a lithium metal plate.

The negative electrode current collector is for support of the negative electrode active material layer, as described in the positive electrode current collector.

The negative electrode active material layer may comprise an electrically conductive material, a binder, etc. in addition to the negative electrode active material. At this time, the conductive material and the binder are as described above.

The negative electrode active material may comprise a material capable of reversibly intercalating or de-intercalating lithium ion (Li⁺), a material capable of reacting with lithium ion to reversibly form lithium containing compounds, lithium metal, or lithium alloy.

The material capable of reversibly intercalating or de-intercalating lithium ion (Li⁺) can be, for example, crystalline carbon, amorphous carbon, or a mixture thereof. The material capable of reacting with lithium ion (Li⁺) to reversibly form lithium containing compounds may be, for example, tin oxide, titanium nitrate, or silicon. The lithium alloy may be, for example, an alloy of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be lithium metal, and specifically, may be in the form of a lithium metal thin film or a lithium metal powder.

A separator may be interposed between the positive electrode and the negative electrode.

The separator separates or insulates the positive electrode and the negative electrode from each other and enables lithium ions to be transported between the positive electrode and the negative electrode, and may be made of a porous nonconductive or insulating material. The separator may be used without a particular limitation as long as it is used as a separator in a typical lithium secondary battery. The separator may be an independent member such as a film or a coating layer added to the positive electrode and/or the negative electrode.

As the separator, a separator with excellent impregnating ability for the electrolyte along with low resistance to ion migration in the electrolyte is preferable.

The separator may be made of a porous substrate. Any of the porous substrates can be used as long as it is a porous substrate commonly used in a secondary battery. A porous polymer film may be used alone or in the form of a laminate. For example, a non-woven fabric made of high melting point glass fibers, or polyethylene terephthalate fibers, etc. or a polyolefin-based porous membrane may be used, but is not limited thereto.

The material of the porous substrate is not particularly limited in the present invention, and any material can be used as long as it is a porous substrate commonly used in an electrochemical device. For example, the porous substrate may comprise at least one material selected from the group consisting of polyolefin such as polyethylene and polypropylene, polyester such as polyethyleneterephthalate and polybutyleneterephthalate, polyamide, polyacetal, polycarbonate, polyimide, polyetheretherketone, polyethersulfone, polyphenyleneoxide, polyphenylenesulfide, polyethylenenaphthalate, polytetrafluoroethylene, polyvinylidene fluoride, polyvinyl chloride, polyacrylonitrile, cellulose, nylon, poly(p-phenylene benzobisoxazole), and polyarylate.

The thickness of the porous substrate is not particularly limited, but may be 1 to 100 *µ*m, and preferably 5 to 50 µm. Although the thickness range of the porous substrate is not particularly limited to the above-mentioned range, if the thickness is excessively thinner than the lower limit described above, mechanical properties are deteriorated and thus the separator may be easily damaged during use of the battery.

The average size and porosity of the pores present in the porous substrate are also not particularly limited, but may be 0.001 µm to 50 µm and 10 to 95%, respectively.

The electrolyte contains lithium ions, and is to cause an electrochemical oxidation or reduction reaction at the positive electrode and the negative electrode through them.

The electrolyte may be a non-aqueous electrolyte or a solid electrolyte that does not react with lithium metal, but is preferably a non-aqueous electrolyte, and includes an electrolyte salt and an organic solvent.

The electrolyte salt contained in the non-aqueous electrolyte is a lithium salt. The lithium salt may be used without limitation as long as it is commonly used in an electrolyte for a lithium secondary battery. For example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, LiN(SO₂F)₂, lithium chloroborane, lithium lower aliphatic carboxylate, lithium tetraphenyl borate, lithium imide and the like can be used.

The concentration of the lithium salt may be 0.2 to 2 M, specifically 0.4 to 2 M, and more specifically 0.4 to 1.7 M depending on various factors such as the exact composition of the electrolyte solvent mixture, the solubility of the salt, the conductivity of dissolved salts, the charging and discharging conditions of the battery, the operating temperature, and other factors known in the field of the lithium battery. If the concentration of the lithium salt is less than 0.2 M, the conductivity of the electrolyte may be lowered and thus the performance of the electrolyte may be deteriorated. If the concentration of the lithium salt is more than 2 M, the viscosity of the electrolyte may increase and thus the mobility of the lithium ions may be reduced.

The organic solvent comprised in the non-aqueous electrolyte, those commonly used in an electrolyte for a lithium secondary battery may be used without limitation. For example, as the organic solvent, ethers, esters, amides, linear carbonates, cyclic carbonates, etc. may be used alone or in mixture of two or more thereof. Among them, an ether-based compound may be typically used.

The ether-based compound may comprise an acyclic ether and a cyclic ether.

For example, the acyclic ether may be, but is not limited to, at least one selected from the group consisting of dimethyl ether, diethyl ether, dipropyl ether, methylethyl ether, methylpropyl ether, ethylpropyl ether, dimethoxyethane, diethoxyethane, ethylene glycol ethylmethyl ether, diethylene glycol dimethyl ether, diethylene glycol diethyl ether, diethylene glycol methylethyl ether, triethylene glycol dimethyl ether, triethylene glycol diethyl ether, triethylene glycol methylethyl ether, tetraethylene glycol dimethyl ether, tetraethylene glycol diethyl ether, tetraethylene glycol methylethyl ether, polyethylene glycol dimethyl ether, polyethylene glycol diethyl ether, and polyethylene glycol methylethyl ether.

For example, the cyclic ether may be, but is not limited to, at least one selected from the group consisting of 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxy benzene, 1,3-dimethoxy benzene, 1,4-dimethoxy benzene, and isosorbide dimethyl ether.

The ester in the organic solvent may be, but is not limited to, at least one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone, and ε-caprolactone, and a mixture of two or more thereof.

Specific examples of the linear carbonate compound may representatively comprise, but is not limited to, at least one selected from the group consisting of dimethyl carbonate (DMC), diethyl carbonate (DEC), dipropyl carbonate, ethylmethyl carbonate (EMC), methylpropyl carbonate, and ethylpropyl carbonate, or a mixture of two or more thereof.

In addition, specific examples of the cyclic carbonate compound may comprise at least one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate, and halides thereof, or a mixture of two or more thereof. Examples of such halides include, but are not limited to, fluoroethylene carbonate (FEC) and the like.

The electrolyte may further comprise a nitric acid or nitrous acid-based compound as an additive in addition to the electrolyte salt and the organic solvent described above. The nitric acid or nitrous acid-based compounds have an effect of forming a stable film on the lithium metal electrode as a negative electrode and improving the charging/discharging efficiency.

The nitric acid or nitrous acid-based compounds may be at least one selected from the group consisting of inorganic nitric acid or nitrous acid compounds such as lithium nitrate (LiNO₃), potassium nitrate (KNO₃), cesium nitrate (CsNO₃), barium nitrate (Ba(NO₃)₂), ammonium nitrate (NH₄NO₃), lithium nitrite (LiNO₂), potassium nitrite (KNO₂), cesium nitrite (CsNO₂), ammonium nitrite (NH₄NO₂); organic nitric acid or nitrous acid compounds such as methyl nitrate, dialkyl imidazolium nitrate, guanidine nitrate, imidazolium nitrate, pyridinium nitrate, ethyl nitrite, propyl nitrite, butyl nitrite, pentyl nitrite, octyl nitrite; organic nitro compounds such as nitromethane, nitropropane, nitrobutane, nitrobenzene, dinitrobenzene, nitropyridine, dinitropyridine, nitrotoluene, dinitrotoluene, and the combinations thereof. Preferably, lithium nitrate may be used.

The injection of the electrolyte can be performed at an appropriate stage of the manufacturing process of the electrochemical device depending on the manufacturing process and required properties of the final product. That is, it can be applied before assembling the electrochemical device or in the final stage of assembling the electrochemical device.

In the case of the lithium secondary battery according to the present invention, it is possible to perform laminating or stacking and folding processes of the separator and the electrode, in addition to the winding process which is a general process.

The shape of the lithium secondary battery is not particularly limited, and may be of various shapes such as a cylindrical shape, a laminate shape, or a coin shape.

### PREFERRED MODE FOR CARRYING OUT THE INVENTION

Hereinafter, preferred examples are provided to help understanding of the present invention, but the following examples are only for exemplifying the present invention, and it is apparent to those skilled in the art that various changes and modifications can be made within the scope and spirit of the present invention, and such changes and modifications are within the scope of the appended claims.

### [Preparation Example 1. Preparation of LiOH-treated Mo₆S₈]

4.8 g of CuS, 7.2 g of Mo and 12 g of MoS₂ were ball milled at 240 rpm for 16 hours. Thereafter, the obtained mixture was heated in a furnace under H₂/Ar atmosphere to a temperature of 1000°C for 12 hours to prepare Cu₂Mo₆S₈. The Cu₂Mo₆S₈ obtained above was added to an 8M aqueous hydrochloric acid solution and stirred at a temperature of 50°C to prepare copper-free Mo₆S₈.

Mo₆S₈ obtained above was added to 0.1M LiOH aqueous solution and stirred for 24 hours to prepare LiOH-treated Mo₆S₈.

### [Preparation Example 2. Preparation of Mo₆S₈]

4.8 g of CuS, 7.2 g of Mo and 12 g of MoS₂ were ball milled at 240 rpm for 16 hours. Thereafter, the obtained mixture was heated in a furnace under H₂/Ar atmosphere to a temperature of 1000°C for 12 hours to prepare Cu₂Mo₆S₈. Cu₂Mo₆S₈ obtained above was added to an 8M aqueous hydrochloric acid solution and stirred at a temperature of 50°C to prepare copper-free Mo₆S₈.

### <Manufacture of lithium-sulfur battery>

### Example 1.

A positive electrode active material, an additive, a thickener, and a binder were mixed in a weight ratio of 91:5:1.5:2.5 to obtain a mixture. The positive electrode active material was the S/CNT composite (S:CNT=75:25) obtained by mixing sulfur (product of Sigma-Aldrich) with carbon nanotubes using a ball mill, and then heat-treating at 155°C, the additive was LiOH-treated Mo6S8 prepared in Preparation Example 1, the thickener was lithium-carboxymethylcellulose (Li-CMC, LiCMC1000, GLchem), and the binder was styrene-butadiene rubber (SBR).

The mixture was mixed with water to prepare a slurry composition for a positive electrode for a lithium-sulfur battery.

The slurry composition for the positive electrode was coated on one surface of an aluminum foil positive electrode current collector having a thickness of 20 *µ*m, then dried at 50°C for 2 hours, and rolled to manufacture a positive electrode with a positive electrode active material layer.

The positive electrode and the negative electrode were positioned to face each other, and a polyethylene separator having a thickness of 20 µm and a porosity of 45% was interposed therebetween, and 130 µℓ of electrolyte was injected to manufacture a lithium-sulfur battery.

At this time, a lithium metal thin film having a thickness of 40 µm was used as the negative electrode, and a mixture obtained by dissolving 1M concentration of lithium bis(trifluoromethanesulfonyl)imide (LiTFSI) and 1 % by weight of lithium nitrate (LiNO₃) in an organic solvent consisting of 1,3-dioxolane and dimethoxyethane (DOL:DME=1:1 (volume ratio)) was used as the electrolyte.

### Comparative Example 1.

A lithium-sulfur battery was manufactured in the same manner as in Example 1, except that carbon fiber (vapor grown carbon fiber, VGCF) was used as an additive in the slurry composition for the positive electrode.

### Comparative Example 2.

A lithium-sulfur battery was manufactured in the same manner as in Example 1, except that Mo₆S₈ prepared in Preparation Example 2 is used as an additive in the slurry composition for the positive electrode.

### Experimental example 1. Evaluation of characteristics of lithium-sulfur battery

### (1) Measurement of initial discharging capacity

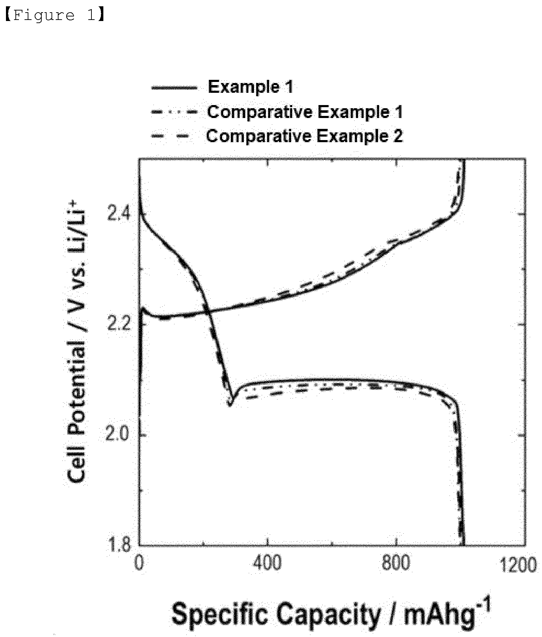

For lithium-sulfur batteries manufactured in Example 1, and Comparative Examples 1 and 2, a change in charging/discharging characteristics was tested using a charging/discharging measuring device (LAND CT-2001A, a product from Wuhan company). The obtained battery was examined for initial discharging capacity under 0.1C/0.1C charging/discharging conditions, and the results are shown in FIG. 1.

As shown in FIG. 1, the lithium-sulfur battery of Example 1 of the present invention showed an initial discharging capacity similar to Comparative Example 1 and Comparative Example 2. However, it was confirmed that the lithium-sulfur battery of Example 1 of the present invention has improved overvoltage compared to Comparative Example 1 and Comparative Example 2.

### (2) Measurement of lifetime characteristics

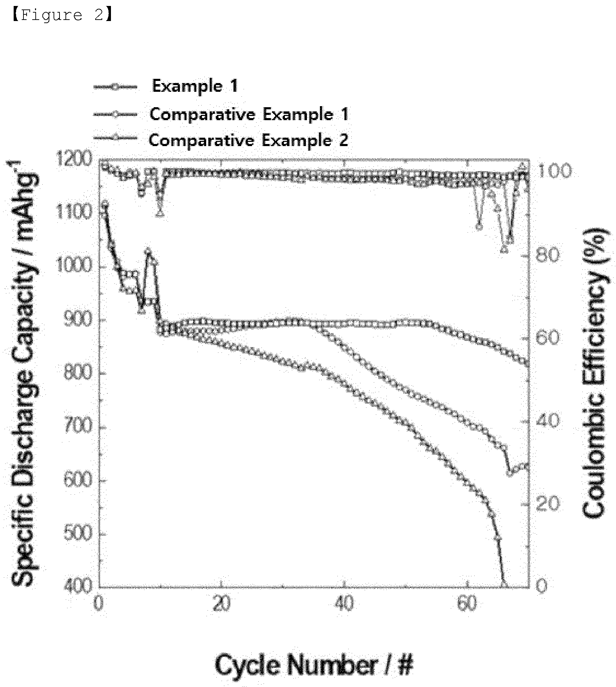

For the batteries manufactured in Example 1 and Comparative Example 1 and 2, lifetime characteristics were measured by charging/discharging at 0.1C/0.1C during the initial 3 cycles, and then charging/discharging at 0.2C/0.2C during 3 cycles, and then charging/discharging at 0.3C/0.5C, thereby repeating 60 cycles of charging/discharging by using a charging/discharging measuring device (LAND CT-2001A, a product from Wuhan company), and the results are shown in FIG. 2.

As shown in FIG. 2, the lithium-sulfur battery of Example 1 of the present invention showed very good lifetime characteristics compared to Comparative Example 1 and Comparative Example 2. Specifically, the lithium-sulfur battery of Example 1 showed a decrease in discharge capacity after 50 cycles, but Comparative Example 1 showed the result that the discharging capacity was gradually decreased from 30 cycles and Comparative Example 2 showed the result that the discharging capacity was gradually decreased from the beginning of the cycle.

### (3) Measurement of output characteristics

For the lithium-sulfur batteries prepared in Example 1, and Comparative Example 1 and 2, the resistance was measured by performing an HPPC test in which a 0.5C discharging current was applied for 10 seconds every 10% of SOC in a fully charged state.

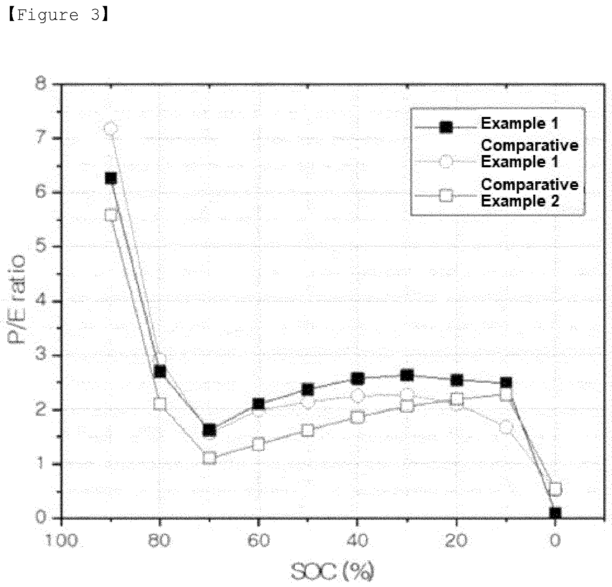

As shown in FIG. 3, it was confirmed that the lithium-sulfur battery of Example 1 of the present invention has significantly improved resistance properties compared to Comparative Example 1 and Comparative Example 2, and thus, the result showed that in particular, the output characteristics were improved at SOC 40 or less.

From this, it was confirmed that since the lithium secondary battery comprising the positive electrode comprising a base-treated Mo₆S₈ as an additive, preferably the lithium-sulfur battery suppresses the leaching of lithium polysulfide by promoting the conversion between sulfur (S) and lithium sulfide (LiS) and increases the stability of the positive electrode active material layer, the overvoltage of the lithium-sulfur battery may be improved, and the lifetime and output characteristics may be improved.

## Claims

1. A positive electrode for a lithium secondary battery comprising a current collector; and a positive electrode active material layer disposed on at least one surface of the current collector,
wherein the positive electrode active material layer comprises a positive electrode active material and an additive; and
wherein the positive electrode active material comprises at least one selected from the group consisting of elemental sulfur (S₈), Li₂S, (n≥1, n is an integer), organic sulfur compound and carbon-sulfur polymer [(C₂Sₓ)ₙ, 2.5 ≤ x ≤ 50, n ≥ 2, x and n are integers];
**characterized in that** the additive comprises a base-treated Mo₆S₈

2. The **positive el**ectrode for the lithium secondary battery according to claim 1, wherein the base comprises lithium hydroxide or potassium hydroxide.

3. The positive electrode for the lithium secondary battery according to claim 1, wherein a pH of the positive electrode active material layer is 7 to 9.

4. The positive electrode for the lithium secondary battery according to claim 1, wherein the additive is contained in an amount of 1 to 10% by weight based on the total weight of 100% by weight of the base solids included in the positive electrode active material layer.

5. The positive electrode for the lithium secondary battery according to claim 1, wherein the positive electrode active material comprises a sulfur-carbon composite.

6. The positive electrode for the lithium secondary battery according to claim 1, wherein the positive electrode active material layer further comprises at least one of a binder and a conductive material.

7. A lithium secondary battery comprising the positive electrode of any one of claims 1 to 6; a negative electrode; a separator interposed between the positive electrode and the negative electrode; and an electrolyte.

8. The lithium secondary battery according to claim 7, wherein the lithium secondary battery is a lithium-sulfur battery.

## Patentansprüche

1. Positive Elektrode für eine Lithium-Sekundärbatterie, umfassend einen Stromabnehmer; und eine Positivelektroden-Aktivmaterialschicht, die auf mindestens einer Oberfläche des Stromabnehmers angeordnet ist,
wobei die Positivelektroden-Aktivmaterialschicht ein Positivelektroden-Aktivmaterial und ein Additiv umfasst; und
wobei das Positivelektroden-Aktivmaterial mindestens eines ausgewählt aus der Gruppe bestehend aus elementarem Schwefel (S₈), Li₂Sₙ (n≥1, n ist eine ganze Zahl), organischer Schwefelverbindung und Kohlenstoff-Schwefel-Polymer [(C₂Sₓ)ₙ, 2,5 ≤ x ≤ 50, n ≥ 2, x und n sind ganze Zahlen] umfasst;
**dadurch gekennzeichnet, dass** das Additiv ein basenbehandeltes Mo₆S₈ umfasst

2. Positive Elektrode für die Lithium-Sekundärbatterie nach Anspruch 1, wobei die Base Lithiumhydroxid oder Kaliumhydroxid umfasst.

3. Positive Elektrode für die Lithium-Sekundärbatterie nach Anspruch 1, wobei ein pH-Wert der Positivelektroden-Aktivmaterialschicht 7 bis 9 beträgt.

4. Positive Elektrode für die Lithium-Sekundärbatterie nach Anspruch 1, wobei das Additiv in einer Menge von 1 bis 10 Gew.- %, bezogen auf das Gesamtgewicht von 100 Gew.-% der in der Positivelektroden-Aktivmaterialschicht enthaltenen Basenfeststoffe, enthalten ist.

5. Positive Elektrode für die Lithium-Sekundärbatterie nach Anspruch 1, wobei das Positivelektroden-Aktivmaterial einen Schwefel-Kohlenstoff-Verbundstoff umfasst.

6. Positive Elektrode für die Lithium-Sekundärbatterie nach Anspruch 1, wobei die Positivelektroden-Aktivmaterialschicht ferner mindestens eines von einem Bindemittel und einem leitfähigen Material umfasst.

7. Lithium-Sekundärbatterie, umfassend die positive Elektrode nach einem der Ansprüche 1 bis 6; eine negative Elektrode; einen Separator, der zwischen der positiven Elektrode und der negativen Elektrode angeordnet ist; und einen Elektrolyten.

8. Lithium-Sekundärbatterie nach Anspruch 7, wobei die Lithium-Sekundärbatterie eine Lithium-Schwefel-Batterie ist.

## Revendications

1. Électrode positive pour une batterie rechargeable au lithium comprenant un collecteur de courant ; et une couche de matériau actif d'électrode positive disposée sur l'une des surfaces du collecteur de courant,
dans laquelle la couche de matériau actif d'électrode positive comprend un matériau actif d'électrode positive et un additif ; et
dans laquelle le matériau actif d'électrode positive comprend un ou plusieurs éléments sélectionnés dans le groupe constitué de soufre élémentaire (S₈), Li₂Sₙ (n≥1, n est un nombre entier), un composé de soufre organique et un polymère de carbone-soufre [(C₂Sₓ)ₙ, 2,5 ≤ x ≤ 50, n ≥ 2, x et n sont des nombres entiers] ;
**caractérisé en ce que** l'additif comprend un Mo₆S₈ traité par une base

2. Électrode positive pour la batterie rechargeable au lithium selon la revendication 1, dans laquelle la base comprend un hydroxyde de lithium ou un hydroxyde de potassium.

3. Électrode positive pour la batterie rechargeable au lithium selon la revendication 1, dans laquelle un pH de la couche de matériau actif d'électrode positive est 7 à 9.

4. Électrode positive pour la batterie rechargeable au lithium selon la revendication 1, dans laquelle l'additif est contenu dans une quantité de 1 à 10 % en poids sur la base du poids total de 100 % en poids des solides de base inclus dans la couche de matériau actif d'électrode positive.

5. Électrode positive pour la batterie rechargeable au lithium selon la revendication 1, dans laquelle le matériau actif d'électrode positive comprend un composite de carbone-soufre.

6. Électrode positive pour la batterie rechargeable au lithium selon la revendication 1, dans laquelle le couche de matériau actif d'électrode positive comprend en outre soit un liant, soit un matériau conducteur.

7. Batterie rechargeable au lithium comprenant l'électrode positive selon l'une quelconque des revendications 1 à 6 ; une électrode négative ; un séparateur interposé entre l'électrode positive et l'électrode négative ; et un électrolyte.

8. Batterie rechargeable au lithium selon la revendication 7, dans laquelle la batterie rechargeable au lithium est une batterie au lithium-soufre.
